Europäisches Patentamt

European Patent Office

Office européen des brevets

(11) Numéro de publication: **0 429 327 A1**

# DEMANDE DE BREVET EUROPEEN

(21) Numéro de dépôt: 90403077.2

(22) Date de dépôt: 30.10.90

(51) Int. Cl.⁵: **B21D 17/02**, B21D 53/88,
F16D 3/20, F16D 3/24

(30) Priorité: 17.11.89 FR 8915106

(43) Date de publication de la demande:
29.05.91 Bulletin 91/22

(84) Etats contractants désignés:
DE ES GB IT

(71) Demandeur: **GLAENZER SPICER**
**10 Rue J.P. Timbaud**
**F-78301 Poissy(FR)**

(72) Inventeur: **Orain, Michel**
**10, rue des Côtes de Vannes**
**F-78700 Conflans-Ste-Honorine(FR)**

(74) Mandataire: **Kohn, Philippe et al**
**c/o CABINET LAVOIX 2, place d'Estienne**
**d'Orves**
**F-75441 Paris Cédex 09(FR)**

(54) Procédé et outillage pour réaliser un barillet et joint de transmission articulé télescopique comprenant un tel barillet.

(57) Le barillet à former comporte des pistes intérieures à profil circulaire adossées sur des arêtes (4).

On part d'une ébauche en tôle (11) qu'on place autour d'un mandrin de formage intérieur (17) muni de protubérances monobloc (21a) ou rapportées rotatives (21) définissant des surfaces de formage (18) pour les pistes. On déplace radialement trois matrices (12) comportant une saillie (13) qui amorce un pli (25) puis force ce pli entre les protubérances pour réaliser l'arête (4) par écoulement de matière vers cette région qui sera très chargée en service.

Utilisation pour fabriquer de manière très économique des barillets de précision.

FIG.3

La présente invention concerne un procédé pour réaliser un barillet de joint de transmission articulé télescopique, en particulier pour l'automobile.

La présente invention concerne également un outillage pour réaliser un tel barillet.

La présente invention concerne également un joint de transmission articulé télescopique comprenant un tel barillet, en particulier pour l'automobile.

On connaît d'après le FR-A- 2 607 883 un joint de transmission homocinétique comprenant un organe intérieur, encore appelé "tripode", muni de trois bras disposés sensiblement radialement par rapport à son axe et partiellement entourés chacun par deux segments de galet dont les faces radialement extérieures, de profil transversal courbe, sont en contact de roulement longitudinal et d'oscillation latérale avec des pistes longitudinales formées sur la face intérieure d'un barillet qui entoure l'organe intérieur et qui est relié à l'autre des deux arbres entre lesquels la transmission doit être réalisée.

Les organes intercalaires constitués selon ce document par des segments de galet transmettent des forces orientées tangentiellement entre les bras de l'organe intérieur et les pistes correspondantes du barillet, en un point des pistes qui est fonction de l'état de compression télescopique du joint, de l'angle entre les axes de l'organe intérieur et respectivement du barillet, et de la position du bras considéré par rapport au plan dans lequel se trouvent ces deux axes. Au lieu d'être des segments de galet, les organes intercalaires peuvent être des patins qui coulissent le long des pistes, ou des organes mixtes capables de rouler et de coulisser tels que prévus selon le FR-A- 2 622 653, ou encore des organes à configuration variable tels que décrits par exemple dans le FR-A-2 525 306. Habituellement, l'organe intérieur a trois bras radiaux, d'où son nom usuel de tripode, mais ce nombre n'est pas obligatoire, et des organes intérieurs ayant par exemple deux ou quatre bras sont concevables.

Le barillet est souvent fermé d'un côté par un fond, de manière à constituer avec ce fond ce que l'on appelle un "bol", de forme générale cylindrique.

Le barillet est réalisé à partir d'une ébauche en acier ayant une surface extérieure cylindrique et une surface intérieure dans laquelle on usine les pistes longitudinales. Le barillet constitue généralement la pièce la plus onéreuse du joint par suite du volume de matière qu'il représente et de la difficulté d'usiner les pistes avec la précision et l'état de surface requis à l'intérieur de cette pièce fermée par le fond.

On a essayé de mettre en oeuvre des procédés d'extrusion à froid ou à mi-chaud, mais la qualité de surface, la précision du profil et la rectitude nécessaires pour les pistes sont insuffisantes pour assurer à ces joints, en production de grande série, les hautes qualités de confort attendues en service, dans des conditions économiquement compétitives.

Par ailleurs, chaque piste a une longueur qui est grande relativement à son diamètre, de sorte que la rectification des pistes s'avère trop onéreuse.

Le but de la présente invention est de proposer un procédé et un outillage pour réaliser un barillet dans des conditions particulièrement économiques, ainsi qu'un joint de transmission équipé d'un tel barillet. Le procédé et l'outillage de réalisation doivent permettre aux joints équipés des barillets ainsi obtenus de bénéficier pleinement de leurs hautes performances intrinsèques de confort.

Suivant un premier aspect de l'invention, le procédé pour former un barillet pour joint de transmission articulé coulissant, ce barillet comportant une paroi annulaire dont une face intérieure définit des pistes à profil sensiblement circulaire qui s'étendent parallèlement à un axe du barillet, est caractérisé en ce qu'on place une paroi latérale sensiblement cylindrique d'une ébauche entre, radialement à l'intérieur de la paroi latérale, un mandrin de formage intérieur comportant des surfaces de formage sensiblement complémentaire des pistes à former, et, radialement à l'extérieur de la paroi latérale, des matrices se succédant circonférentiellement avec un jeu circonférentiel entre elles et présentant des surfaces de pression vers la paroi latérale de l'ébauche, et en ce qu'on communique aux matrices un déplacement simultané vers l'axe du mandrin pour que leur surface de pression comprime radialement la paroi latérale de l'ébauche contre les surfaces de formage du mandrin.

On réalise ainsi de manière très simple et en une seule opération rapide et précise toutes les pistes à former sur la face intérieure de la paroi annulaire du barillet.

L'ébauche utilisée au départ de ce procédé peut être une ébauche en tôle emboutie dont la paroi a une épaisseur sensiblement constante.

Dans le cas fréquent où le barillet à réaliser comprend des pistes concaves s'étendant chacune sur un flanc d'une arête la séparant d'une piste voisine s'étendant sur l'autre flanc de cette arête, les surfaces de pression des matrices utilisées comportent des saillies au moyen desquelles on fait s'écouler la matière de l'ébauche radialement vers l'intérieur dans des dégagements définis chacun entre des protubérances du mandrin qui portent les surfaces de formage de deux pistes voisines à réaliser.

Par cet écoulement de la matière, on crée une sorte bourrelet renforcé dans l'une des régions du barillet qui sont particulièrement sollicitées lors du fonctionnement du joint de transmission.

Suivant un deuxième aspect de l'invention, l'outillage de presse pour former un barillet pour joint de transmission articulé coulissant est caractérisé en ce qu'il comprend un mandrin destiné à être relié à un piston de presse pour se déplacer parallèlement à un axe central de ce mandrin, ce mandrin présentant sur sa périphérie des surfaces de formage cylindriques d'axe parallèle à l'axe central, l'outillage comprenant en outre des matrices se succédant circonférentiellement avec, au moins dans une position de repos, un jeu circonférentiel entre elles, ces matrices étant montées sur des glissières ayant des orientations convergeant vers l'axe du mandrin, un poussoir destiné à être relié au piston de presse pour solliciter simultanément les matrices en coulissement le long des glissières dans la direction convergeant vers l'axe du mandrin.

Grâce au montage des matrices sur des glissières obliques, le mouvement rectiligne d'une presse peut être transformé en un mouvement simultané des matrices vers l'axe du mandrin, ce mouvement, bien qu'oblique par rapport aux glissières, pouvant être strictement radial par rapport à l'ébauche et au mandrin puisque le mandrin, relié au piston de presse, peut avoir avec l'ébauche un mouvement correspondant à la composante axiale du mouvement des matrices.

Suivant un troisième aspect de l'invention, le joint de transmission articulé télescopique, notamment pour véhicule, comprenant un organe intérieur muni de bras disposés sensiblement radialement relativement à son axe et partiellement entourés chacun par deux éléments intercalaires dont les faces radialement extérieures, de profil transversal courbe, s'appuient sur des pistes longitudinales de profil sensiblement complémentaire appartenant à la face intérieure d'une paroi annulaire d'un barillet par rapport auquel chaque bras de l'organe intérieur est mobile selon une course télescopique prédéterminée, est caractérisé en ce que la paroi annulaire est réalisée en tôle et présente un profil extérieur qui suit approximativement le profil intérieur de cette paroi.

Selon un mode de réalisation préféré dans lequel les pistes sont concaves et réparties en paires séparées par des arêtes, l'épaisseur radiale de matière de la paroi annulaire est accrue au droit des arêtes.

D'autres particularités et avantages de l'invention ressortiront encore de la description ci-après.

Aux dessins annexés, donnés à titre d'exemples non limitatifs :
- la figure 1 est une vue en coupe longitudinale d'un barillet conforme à l'invention, selon le plan axial I-I de la figure 2 ;
- la figure 2 est une coupe transversale du barillet, la partie gauche selon le plan II-II de la figure 1 et la partie droite selon le plan II'-II' de la figure 1 ;
- la figure 3 est une coupe transversale du barillet en cours de formage, au moyen d'un mandrin de formage monobloc en bas de la figure et d'un mandrin de formage composé en haut de la figure, les trois matrices étant en phase initiale, intermédiaire et respectivement finale de formage ;
- la figure 4 est une vue en coupe transversale des matrices du mandrin contractable, en phase intermédiaire de formage en bas de la figure et en phase finale de formage en haut de la figure, selon IV-IV de la figure 14 ;
- la figure 5 est une demi-coupe axiale d'un barillet auquel a été soudée une bride ;
- la figure 6 est une demi-coupe axiale d'un barillet auquel a été soudée une fusée ;
- la figure 7 est une demi-vue de face du barillet à bride de la figure 5 ;
- la figure 8 est une demi-vue de face du barillet à fusée de la figure 6 ;
- la figure 9 est une vue de dessus de la partie périphérique de l'outillage de formage sur presse, avec, respectivement en haut à droite et en bas à droite, des coupes partielles selon les plans IX-IX et IX'-IX' respectivement de la partie droite de la figure 10 ;
- la figure 10 est une coupe axiale de l'outillage de presse à mandrin à configuration fixe, selon la ligne X-X de la figure 9, l'outillage étant en phase initiale de formage à la partie gauche de la figure et en phase finale de formage à la partie droite de la figure ;
- la figure 11 est une demi-vue montrant la couronne de frettage 40 en coupe axiale et une contre-glissière 43 en élévation latérale ;
- la figure 12 est une coupe axiale d'un bol ébauche ;
- la figure 13 est une coupe axiale d'un bol ébauche à rebord ;
- la figure 14 est une vue analogue à la figure 10 mais relative à un deuxième mode de réalisation de l'outillage, correspondant au mandrin de la figure 4 ;
- la figure 15 est une vue en élévation latérale d'un joint de transmission articulé télescopique selon l'invention, avec coupe axiale du barillet selon le plan XV-XV de la figure 16 et coupe d'un arrachement selon le plan XV'-XV' de la figure 16 ; et
- la figure 16 est une vue en bout du joint de la figure 15, avec coupe partielle selon le plan XVI-XVI de la figure 15.

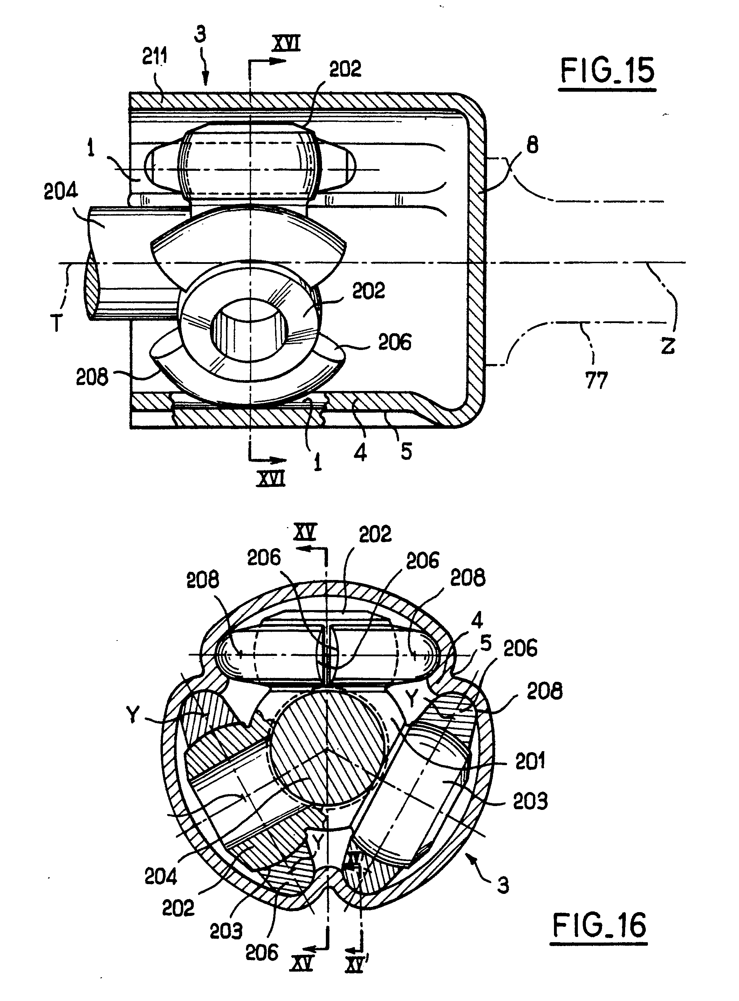

Dans l'exemple représenté aux figures 15 et 16, le joint de transmission homocinétique comprend un premier organe ou tripode comprenant une bague 201 d'axe T, dont partent radialement vers l'extérieur trois bras radiaux 202 également espacés angulairement autour de l'axe T. La paroi latérale de chaque bras 2 est constituée par une zone sphérique convexe 203 dont le centre S est situé à distance de l'axe T. Ce tripode est emmanché et fixé sur un arbre 204 dont le mouvement de rotation autour de l'axe T est à transmettre de manière articulée et télescopique à un élément rotatif 77, d'axe Z qui peut être une fusée d'entraînement d'une roue motrice de véhicule.

Chaque bras 202 du tripode est partiellement entouré par deux segments de galet 206 dont une surface sphérique radialement intérieure (relativement à l'axe du bras) concave est en contact de rotule avec la zone sphérique 203 du bras.

Les segments de galet 206 présentent en outre une face radialement extérieure (relativement à l'axe du bras) torique 208 par laquelle les segments de galet sont en contact de roulement chacun avec l'une respective de six pistes 1 ménagées longitudinalement sur la face radialement intérieure d'une paroi annulaire 211 d'un barillet 3 d'axe Z, solidaire de la fusée 77. Dans l'exemple représenté, le barillet 3 est réalisé sous la forme d'un "bol" en ce sens que la paroi annulaire 211 est raccordée par l'une de ses extrémités à un fond 8 auquel la fusée 77 est fixée, par exemple soudée.

Dans cet exemple de joint, les segments de galet 206 roulent le long des pistes 1 du barillet 3 lors des mouvements télescopiques de l'axe 204 par rapport à la fusée 77, ou bien lorsque chaque bras 202 se déplace par rapport aux deux pistes 1 correspondantes à chaque révolution du joint en raison de l'existence d'un angle entre les axes T de l'arbre 204 et Z de la fusée 77 (fonctionnement sous angle, situation non représentée).

On a représenté en haut de la figure 16 les galets 206 en position extrême autour du bras de tripode associé 202.

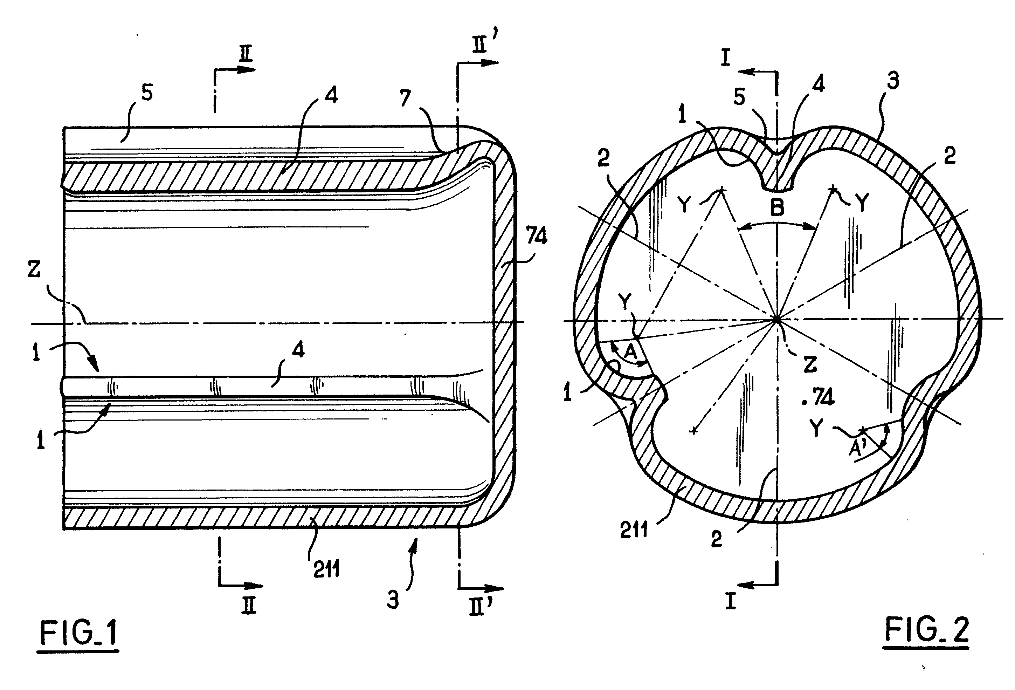

On a représenté à la figure 1 et à la partie gauche de la figure 2 un barillet 3 utilisable pour réaliser le joint décrit en référence aux figures 15 et 16 à titre d'exemple, de même que pour réaliser d'autres joints décrits par exemple dans les FR - A - 2 607 883, 2 622 653 et 2 525 306.

Le profil intérieur de la paroi annulaire 211 du barillet 3 comprend six pistes 1 d'axes Y parallèles à l'axe Z du barillet et s'étendant donc longitudinalement sur la face intérieure de la paroi annulaire 211. Ces pistes 1, qui sont des pistes de roulement dans l'exemple des figures 15 et 16 mais pourraient être des pistes de glissement pour des joints dans lesquels les organes intercalaires sont des patins au lieu d'être des segments de galet, sont géométriquement obtenus en déplacement parallèlement à l'axe Y des génératrices en forme de secteurs de cercle ou sensiblement en forme de secteurs de cercle s'étendant dans un plan perpendiculaire à l'axe Y. Chaque piste 1 s'inscrit dans un angle A dont la valeur peut être de 90° à 120°, et sont situées deux à deux en vis à vis. Chaque paire en vis à vis est disposée symétriquement de part et d'autre d'un demi-plan 2 issu de l'axe Z du barillet 3. Les demi-plans 2 sont déphasés de 120° l'un par rapport aux autres. Les six pistes ont même rayon et leurs axes Y sont situés à la même distance de l'axe Z et à la même distance du demi-plan 2 respectif.

Chaque piste 1 s'étend en particulier sur un flanc d'une arête interne 4 constituée par un pli intérieur de la paroi 211 du barillet. Les arêtes 4 sont dirigées axialement et sont disposées à 120° l'une de l'autre autour de l'axe Z. Chaque arête 4 sépare deux pistes 1 qui appartiennent à deux paires différentes et s'étendent chacune sur l'un des flancs de l'arête.

Le barillet 4 comporte sur sa surface externe, au droit de chacune des arêtes 4, une rainure longitudinale ou vallée 5. L'angle au centre B entre les axes Y de deux pistes 1 situées de part et d'autre d'une arête 4 varie entre 30° et 60° selon le type de joint auquel le barillet est destiné, l'outillage de formage utilisé et la malléabilité de l'acier constitutif.

Au droit de chaque arête 4, l'épaisseur radiale de la paroi annulaire 211 est accrue grâce à un début d'écoulement radial du métal pendant le formage. Cette particularité constitue un renforcement efficace de cette zone soumise à la charge de transfert de couple de la part des organes intercalaires tels que les patins 206, et assure la valeur de l'angle d'ouverture A et l'orientation correcte des pistes 1.

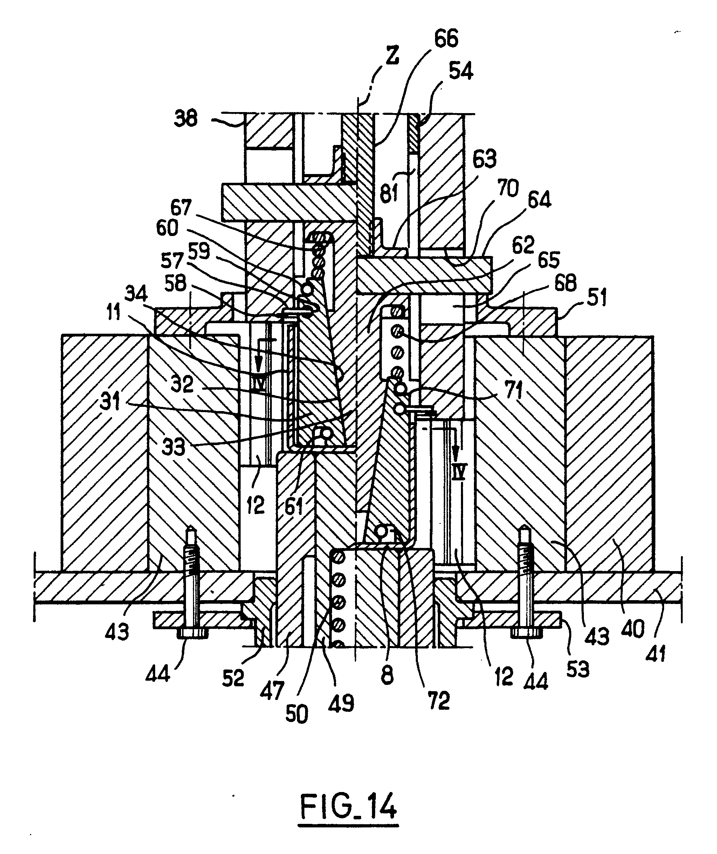

Le barillet 3 est obtenu à partir d'une ébauche 11 (figure 12) ayant la forme d'un bol à fond plat 8 et à paroi latérale cylindrique 9. Cette ébauche est obtenue par emboutissage, selon des procédés industriels connus, dans de la tôle d'acier recuit. L'épaisseur de matière de cette ébauche est par exemple de l'ordre de 4 à 5 mm pour une automobile de taille moyenne.

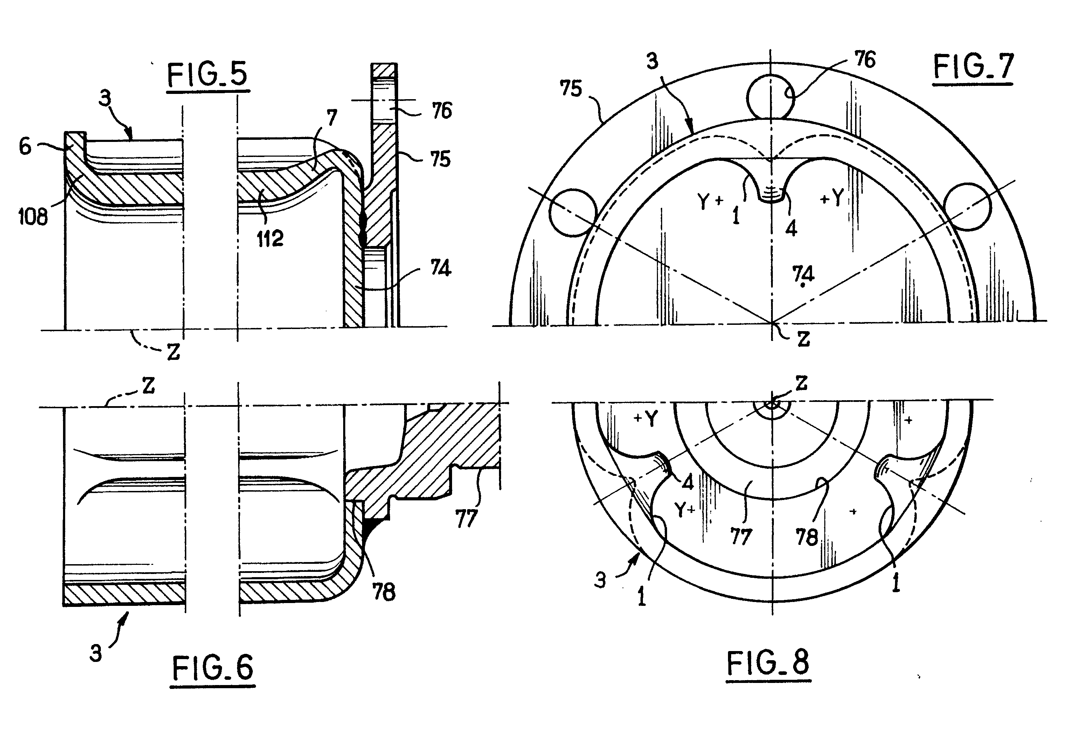

Comme représenté à la figure 13, le bol ébauche 11 peut aussi posséder un rebord 10 évasé vers l'extérieur de manière sensiblement radiale, permettant de réaliser un barillet à rebord 6 orienté radialement vers l'extérieur comme représenté à la figure 5. Ce rebord renforce le barillet 3 près de son ouverture et peut être souhaité pour la commodité de fixation d'un soufflet (non représenté) de protection du joint homocinétique.

La figure 6 montre au contraire le barillet tel qu'obtenu avec l'ébauche de la figure 12 sans rebord.

Comme le montre encore la figure 5 (mais cela est vrai dans le mode de réalisation de la figure 6), à l'extrémité de la paroi annulaire 211 qui est adjacente au fond 74 du bol, on a laissé à la paroi annulaire 211 son profil circulaire initial sensiblement inchangé. De plus, à partir de cette extrémité, la paroi annulaire 211 comporte une région de transition 7, comprenant des profils de transition successifs correspondant à des déplacements de matière dont l'amplitude croît depuis ladite extrémité jusqu'à la région à profil constant occupant la majeure partie de la longueur axiale de la paroi latérale 211.

Ainsi, comme représenté à la partie inférieure droite de la figure 2 correspondant à une coupe à travers la région de transition 7, l'angle $A'$ dans lequel s'inscrivent les pistes 1 dans la région de transition 7 diminue progressivement vers le fond 74 du barillet.

Pour les barillets comportant un rebord 6 (figure 5) il existe une deuxième zone de transition 108 de raccordement au rebord 6. De manière non représentée, l'angle dans lequel s'inscrivent les pistes 1 s'annule progressivement le long de la zone de transition 108 en direction du rebord 6.

Ces zones de transition 7 et 108, impliquées par le formage, sont relativement courtes et ne réduisent pas la course utile des joints coulissants intéressés. Les barillets selon l'invention sont donc très bien adaptés comme composants principaux pour des joints articulés coulissants.

Dans l'exemple des figures 5 et 7, le barillet est soudé par son fond 74 à une bride 75 munie de trous de fixation 76, permettant par exemple de fixer le barillet à une sortie de boîte de vitesses d'automobile. Les trous 76 sont dans le prolongement des vallées 5.

Dans l'exemple des figures 6 et 8, une fusée de roue 77 est soudée sur le fond du barillet découpé pour laisser passage au centrage 78.

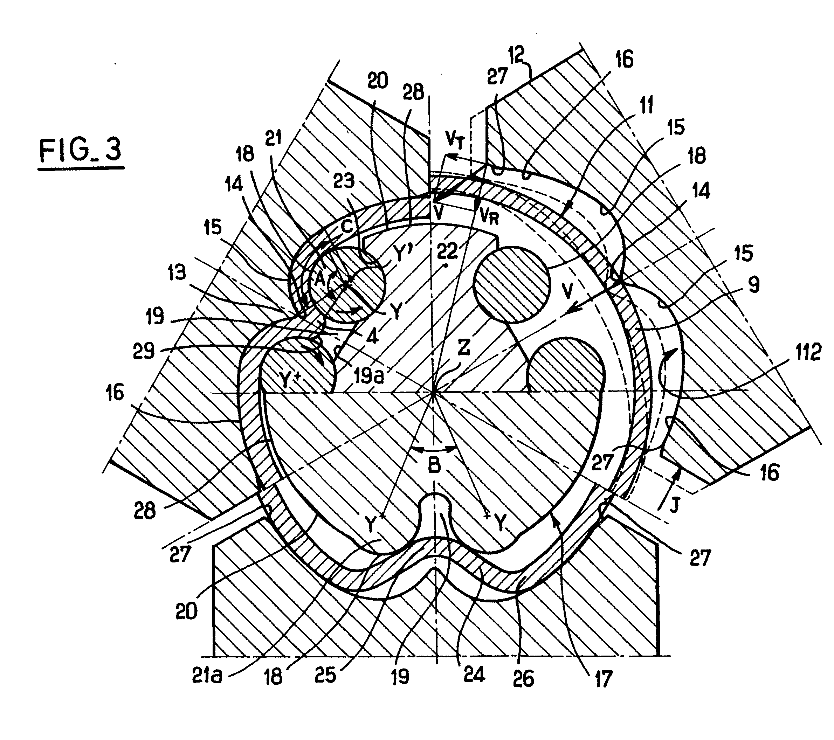

La figure 3 illustre différentes étapes du procédé de formage des pistes 1 sur la face intérieure de la paroi latérale 9 de l'ébauche 11.

Ce procédé utilise un outillage comprenant trois matrices 12 réparties autour d'un mandrin 17 ayant un axe appelé Z car il coïncide avec l'axe Z du bol en cours de formage.

Après recuit convenable, le bol ébauche 11 est introduit autour du mandrin 17 et entre les trois matrices 12 suffisamment écartées radialement pour laisser à la paroi latérale 9 de l'ébauche un espace annulaire suffisant, voir étape a) en haut à droite de la figure 3.

Les matrices 12 présentent chacune face au mandrin 17, c'est-à-dire face à la paroi latérale 9 de l'ébauche 11 lorsque celle-ci est en place, une surface de pression globalement désignée par 112 qui est sensiblement complémentaire du profil extérieur de la paroi latérale 211 du barillet à former. En particulier, la surface de pression 112 de chaque matrice 12 comprend une saillie 13 dont la crête 14, s'étendant parallèlement à l'axe Z, est arrondie. La saillie 13 est comprise entre deux arcs circulaires 15 ayant un profil correspondant sensiblement, à l'épaisseur de paroi de l'ébauche près, à celui des pistes 1 à réaliser. Toutefois, les régions circulaires 15 s'inscrivent dans un angle C qui est légèrement inférieur à l'angle A dans lequel s'inscriront les pistes 1, comme représenté en haut à gauche de la figure 3. En outre, il est préféré que l'axe $Y'$ des régions 15 soit plus écarté de l'arête 4 à réaliser que l'axe Y de la piste 1 à réaliser (comme cela est représenté de manière exagérée à la figure 3), de manière que la matière de l'ébauche soit fortement comprimée entre la surface 15 et le mandrin au voisinage de l'arête 4 où le métal subit la déformation la plus importante.

A son extrémité opposée à la saillie 13, chaque région 15 se raccorde à un profil circulaire 16 concave qui sera centré sur l'axe Z du mandrin et du barillet en fin de formage du barillet. Chaque profil circulaire 16 est suivi, du côté opposé à l'arc circulaire 15, par une région d'extrémité à courbure convexe - ou arrondi - 27.

Le mandrin de formage interne 17 présente un profil extérieur qui de manière générale est sensiblement complémentaire de celui de la face intérieure de la paroi annulaire 211 du barillet à réaliser. En particulier, le mandrin comporte six protubérances longitudinales convexes 21 ou 21a dont la surface extérieure 18 est une surface de formage à section sensiblement circulaire. Chacune des surfaces de formage 18 est destinée à former l'une des pistes du barillet et son axe coïncide avec l'axe Y de la piste 1 à former. Au droit de chaque arête 4 à former, les protubérances circulaires 21 ou 21a sont séparées par un dégagement longitudinal 19 laissant toute liberté au formage de l'arête.

Les protubérances 21 ou 21a voisines qui ne sont pas séparées par un dégagement 19 sont réunies deux à deux par des arcs de circonférence 20 centrés sur l'axe Z qui ont un rayon légèrement inférieur à celui qu'aura la région correspondante de la face intérieure du barillet de façon à présenter un léger jeu 28 avec cette région en fin de formage. Ainsi, l'effort de formage est concentré sur les surfaces des pistes 1, lesquelles nécessitent la plus grande précision et le meilleur état de surface.

Dans le mode de réalisation représenté à la moitié inférieure de la figure 3, le mandrin 17 est monobloc et intègre en une seule pièce les protubérances 21a.

Dans le mode de réalisation représenté à la partie supérieure de la figure 3, le mandrin est de type composé en ce sens que les protubérances 21 sont constituées par six rouleaux cylindriques reposant sur des surfaces d'appui cylindriques concaves 23, de courbure complémentaire, appartenant à un noyau 22 portant les surfaces de raccordement 20.

Cette technique de mandrin composé permet un entretien plus aisé du poli des surfaces de formage 18 en production intensive, et éventuellement une rénovation peu onéreuse par remplacement des rouleaux 21. Par ailleurs, la liberté de rotation de ces rouleaux sur leur surface d'appui 23 facilite l'écoulement du métal en train de former les arêtes 4 sous la poussée des saillies 13 des matrices 12 notamment lorsque l'épaisseur des arêtes 4 (mesurée selon la direction circonférentielle) est faible par rapport à l'épaisseur de la tôle de l'ébauche. Après chaque formage de barillet, on peut injecter un lubrifiant entre les rouleaux 21 et les surfaces d'appui 23 par des conduits appropriés (non représentés) prévus dans le noyau 22, de manière à favoriser la rotation des rouleaux lors du formage du barillet suivant.

Au début de la mise en oeuvre du procédé, les saillies 13 des matrices sont radialement en regard des dégagements 19 du mandrin 17 et les matrices 12 ont entre elles un jeu circonférentiel désigné par J à la figure 3. Selon la présente invention, on forme la paroi annulaire 211 du barillet en déplaçant les matrices 12 simultanément vers l'axe Z.

Dans le plan de la figure 3, ce mouvement correspond à un déplacement de la saillie 13 avec une vitesse V n'ayant pas de composante tangentielle. Par contre, les autres surfaces de formage 15, 16, 17 qui s'étendent sur une égale distance circonférentielle de part et d'autre de la crête 14, ont la même vitesse V que la crête 14 mais, leur position angulaire autour de l'axe Z étant différente, cette vitesse V se décompose, par exemple en ce qui concerne le chanfrein 27 en haut à droite de la figure 3, en une composante radiale VR et une composante tangentielle VT. La composante tangentielle VT produit une réduction progressive du jeu circonférentiel J entre les matrices.

Les pointillés de la partie supérieure droite de la figure 3 représentent la position des matrices 12 en début de formage. A ce stade, les extrémités 27 des matrices entrent en contact avec la paroi 9 du bol 11 alors que les trois crêtes 14 ont déjà donné au bol une forme intermédiaire entre le cercle et le triangle. Au stade intermédiaire de formage représenté en bas de la figure 3, les matrices 12 se sont encore rapprochées de l'axe Z par rapport à la situation représentée en pointillés en haut à droite de la figure. Le profil de la paroi latérale 9 de l'ébauche est comprimé circonférentiellement sur lui-même et un pli 24, dont la crête 25 a été amorcée par la poussée radiale de la saillie 13 des matrices 12, s'accentue et vient s'appliquer spontanément sur les surfaces de formage cylindrique 18 du mandrin 17 pendant que les plis 26 en sens contraire, situés de part et d'autre de chaque saillie 13 roulent vers la saillie 13 adjacente.

Compte tenu de la résorption progressive du jeu circonférentiel J entre les matrices 12, les extrémités 27 des matrices 12 glissent sur la surface extérieure de la paroi latérale 9 de l'ébauche. Les extrémités 27 étant conformées en chanfrein, il n'en résulte aucune dégradation de la paroi de l'ébauche.

La partie supérieure gauche de la figure 3 représente la situation en fin de course des matrices 12 vers l'axe Z. Le jeu circonférentiel J entre les matrices 12 a complètement disparu. Les saillies 13 ont obligé la matière de l'ébauche à s'écouler entre les surfaces de formage 18 voisines, avec une très forte pression contre ces dernières. Il subsiste un léger écartement 28 entre les arcs de raccordement 20 du mandrin et la face intérieure correspondante de la paroi latérale 211 du barillet, ce qui concentre sur tout l'angle A dans lequel s'inscrivent les pistes 1 la force pressante communiquée par les matrices 12. La crête 29 de l'arête 4 résultant du pliage 25 puis de l'écoulement entre les surfaces 18 n'a pas atteint le fond 19a du dégagement 19.

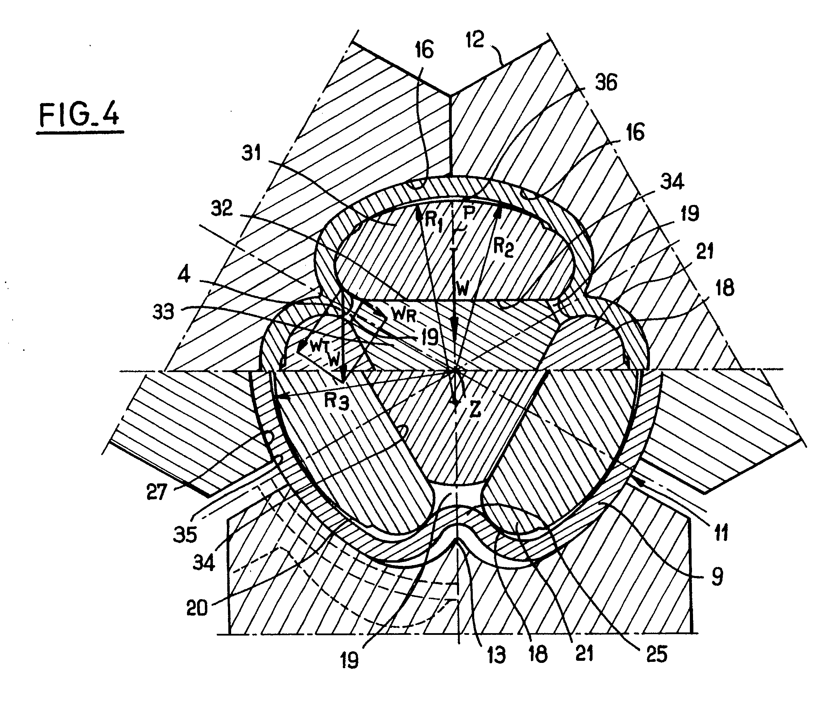

La figure 4 illustre un autre mode de mise en oeuvre du procédé selon l'invention.

Les matrices 12 sont semblables à celles de la figure 3 et ne seront donc pas décrites en détail. Le mandrin 17 est par contre modifié pour faciliter le formage des arêtes 4, dont la hauteur radiale conditionne l'enveloppement que les pistes assurent aux organes intercalaires (segments de galet 206 des figures 15 et 16), ou en d'autres termes la valeur de l'angle A.

A cet effet, le mandrin de formage interne comprend trois éléments de formage 31 contractables radialement, c'est-à-dire mobiles vers l'axe Z, pendant le formage. A cet effet, les éléments de formage 31 comportent chacun une face arrière plane oblique 34 appuyée de manière glissante contre les faces latérales 32 d'un noyau 33 en forme de pyramide à base triangulaire équilatérale. Le mouvement des éléments de formage 31 vers l'axe Z en cours de formage résulte d'un mouvement axial relatif entre le noyau 33 et les éléments de formage 31.

Chaque élément de formage 31 porte deux protubérances 21 définissant les surfaces de formage 18 sensiblement cylindriques pour deux pistes 1 en vis à vis. Les deux surfaces de formage 18 sont réunies par une surface de raccordement 20. Les saillies 13 des matrices 12 sont situées en regard des dégagements 19, lesquels sont ménagés entre les éléments de formage 31 successifs, et c'est dans ces dégagements 19 que vont se former les arêtes 4 du barillet.

On a représenté en pointillés en bas de la figure 4 la situation avant le début du mouvement des matrices 12. Les éléments de formage 31 ont alors la position représentée en trait plein en bas de la figure 4, dans laquelle les dégagements 19 ont une dimension circonférentielle relativement importante.

A partir de cette position représentée en pointillés, on déplace les matrices 12 comme décrit en référence à la figure 3, c'est-à-dire avec une vitesse qui n'a pas de composante tangentielle pour les saillies 13. A ce stade, on maintient les éléments de formage 31 immobiles (excepté un déplacement purement axial qui sera décrit plus loin). Les matrices 12 repoussent la paroi de l'ébauche qui vient appuyer fortement par sa surface intérieure sur la surface de raccordement 20 de chaque élément de formage 31.

Dans l'outillage représenté à la figue 4, les extrémités 27 des matrices n'ont pas la courbure inversée décrite en référence à la figure 3, mais, à titre de variante, le rayon de courbure R1 des surfaces de raccordemnt 20 des éléments de formage 31 est supérieur au rayon intérieur final des régions correspondantes du barillet (rayon R2 en haut de la figure 4) afin de réduire la pression sur les extrémitéss 27 des matrices 12, et éviter ainsi que les arêtes extrêmes 35 des matrices ne dégradent la surface externe du barillet par le mouvement circonférentiel relatif entre ces arêtes 35 et la paroi du barillet. Toutefois, le rayon R1 est inférieur ou sensiblement égal au rayon intérieur R3 de la paroi latérale de l'ébauche pour permettre, en phase de formage intermédiaire (bas de la figure 4), l'appui décrit plus haut entre l'ébauche et les surfaces de raccordement 20 des éléments 31.

En phase intermédiaire de formage (bas de la figure 4) alors que les éléments de formage 31 n'ont pas encore commencé leur mouvement vers l'axe Z, le pli 25 de la paroi latérale 9 de l'ébauche 11 s'est formé dans le dégagement 19 plus facilement que dans le mode de mise en oeuvre selon la figure 3 car le dégagement 19 a une plus grande dimension circonférentielle.

Dans la suite du procédé, les matrices 12 continuent leur mouvement vers l'axe Z, mais ce mouvement s'accompagne d'un mouvement des éléments de formage 31 également vers l'axe Z grâce à un mouvement axial relatif, dans le sens convenable, du noyau 33. Le déplacement des éléments de formage 31, tels que vus dans le plan perpendiculaire à l'axe Z (plan de la figure 4), a une vitesse W qui est sans composante tangentielle dans le plan axial médian P de chaque élément 31. La vitesse des autres points de chaque élément de formage 31 est la même vitesse W que dans le plan P. Toutefois, à distance du plan P, et notamment le long des surfaces de formage 18, voir en haut à gauche de la figure 4, la vitesse W se décompose en une vitesse radiale WR et une vitesse tangentielle WT. L'existence de cette composante tangentielle fait que la dimension circonférentielle des dégagements 19 diminue. En d'autres termes, les surfaces de formage 18, après avoir permis la formation du pli 25 entre elles, pincent ensuite le pli 25 entre elles tandis que les saillies 13 des matrices 12 empêchent la matière de s'échapper radialement vers l'extérieur, de manière à former plus efficacement des arêtes 4 pouvant avoir une épaisseur circonférentielle particulièrement faible.

Entre les régions portant les pistes 1, qui sont donc en contact avec les surfaces de formage 18, la paroi de l'ébauche a subi au cours de la phase finale de formage une compression circonférentielle, ou tangentielle, qui l'a appliquée contre la surface de pression 16 des matrices 12, par effet de voûte. Un jeu 36 apparaît donc entre la paroi intérieure du barillet et les surfaces de raccordement 20 des éléments de formage 31.

Comme dans le cas de la figure 3, à la fin simultanée du mouvement des matrices 12 et du mouvement des éléments de formage 31, le sommet 29 de chaque arête 4 est écarté du fond du dégagement 19 correspondant.

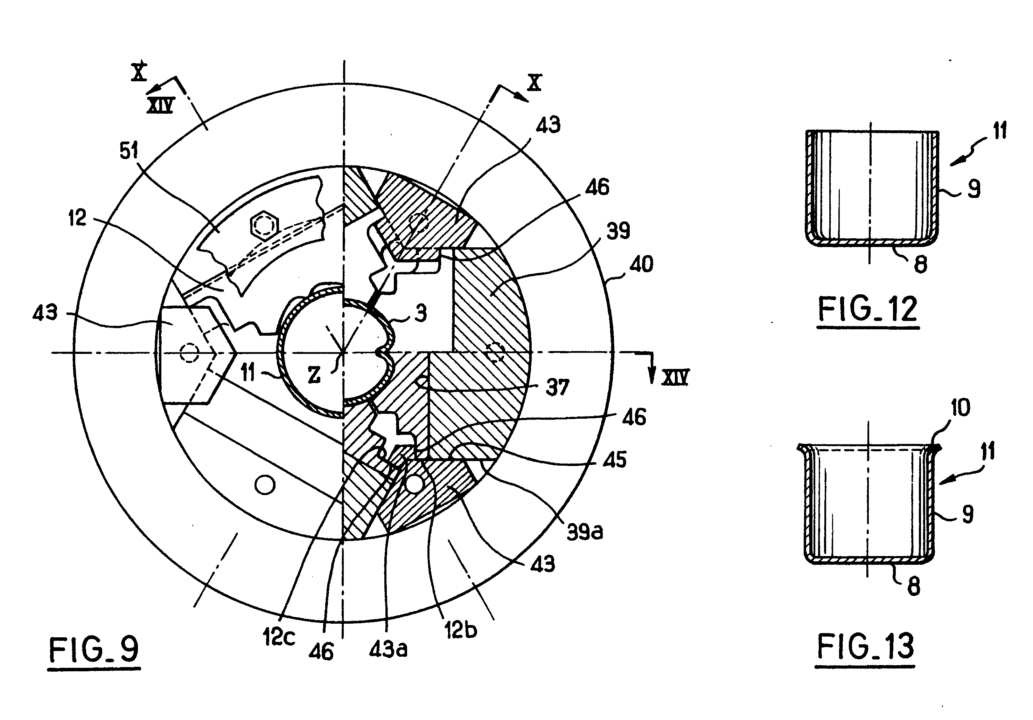

Les figures 9 à 11 représentent schématiquement l'outiliage de presse selon l'invention, permettant le formage industriel économique des barillets à partir des ébauches embouties des figures 12 et 13, au moyen du mandrin intérieur 17 à configuration invariable de la figure 3.

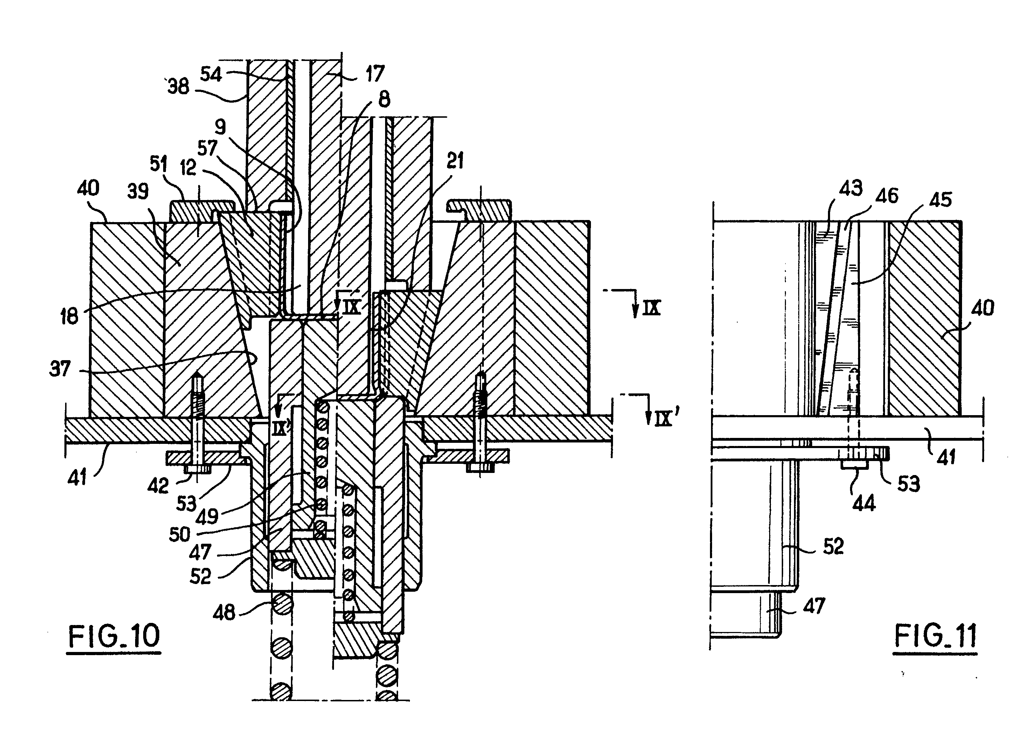

Chaque matrice 12 a une face arrière 12a, dirigée radialement vers l'extérieur, qui est oblique par rapport à l'axe Z et qui s'appuie sur l'une de trois glissières inclinées complémentaires 37, fixes, qui définissent pour les matrices 12 des directions de coulissement convergeant vers le bas et vers l'axe Z. Un poussoir tubulaire 38 fixé au piston d'une presse non représenté s'appuie sur le côté supérieur des trois matrices 12. La descente du piston de presse a pour effet de déplacer conjointement les trois matrices 12 vers le bas le long des glissières 37, ce qui rapproche radialement les matrices de l'axe Z depuis leur position de départ (partie gauche des figures 9 et 10, correspondant à la partie supérieure droite de la figure 3) jusqu'à la position de fin de formage (partie droite des figures 9 et 10, correspondant à la partie supérieure gauche de la figure 3).

Les glissières 37 sont usinées sur des segments 39 qui sont retenus extérieurement par une couronne de frettage 40 et fixés sur une table 41 de la presse, par des vis 42. la couronne de frettage 40 a notamment pour fonction de supporter les efforts de réaction, dirigés radialement vers l'extérieur, qui résultent de l'effort appliqué radialement vers l'intérieur par les matrices 12 sur l'ébauche.

Trois contre-glissières 43 (figures 9 et 11) maintenues par des vis 44 sur la table de presse 41 sont interposées circonférentiellement chacune entre deux segments 39 successifs. Chaque contre-glissière 43 présente vers chacun des segments 39 auxquels elle est adjacente une face 45 parallèle au plan axial de symétrie de ce segment pour bloquer circonférentiellement les segments par appui sur une face correspondante 39a des segments.

La remontée des matrices 12, en fin d'opération de formage, est opérée par un plongeur tubulaire 47 soumis à l'action d'un ressort 48 ou tout autre moyen équivalent tel que vérin pneumatique ou hydraulique. Le plongeur 47 agit simultanément sur la face inférieure des matrices 12 et sur le fond 8 du barillet qui vient d'être formé. Le plongeur renferme un éjecteur 49 mû lui-même vers le haut par rapport au plongeur 49 par un ressort 50 de façon à soulever le barillet terminé hors des matrices, lorsque celles-ci, ayant terminé leur course de remontée, arrivent en butée contre une couronne de butée 51 fixée à la face supérieure des segments 39. Le plongeur 47 coulisse dans un guide tubulaire 52 fixé à la table de presse par une bride 53 et les vis 42 (figure 10) et 44 (figure 11).

Lorsque les matrices sont en butée contre la couronne de butée 51, elles se sont écartées radialement du barillet terminé compte tenu de la pente des glissières 37. Le piston de presse continue de remonter, entraînant avec lui le poussoir 38 qui s'éloigne des matrices 12, et le mandrin 17 dont il est également solidaire. L'éjecteur 49 fait monter avec le mandrin 17 le barillet terminé, qui coiffe l'extrémité inférieure libre du mandrin 17. Une douille de dévêtissage 54 qui est interposée dans un espace annulaire entre le mandrin intérieur 17 et le poussoir tubulaire 38, vient appuyer sur le bord annulaire libre du barillet terminé lorsque à la fin de la course de retour du piston le barillet terminé s'est dégagé des matrices 12. La douille de dévêtissage 54 coulisse alors vers le bas par rapport au poussoir 38 et au mandrin 17 pour dégager le barillet du mandrin 17. La douille de dévêtissage 54 peut être actionnée par butée sur un point fixe du cylindre de presse à un certain stade de la course de remontée du piston de presse, ou encore par un vérin selon une technique connue.

L'opération se déroule comme suit : l'ébauche emboutie, convenablement recuite et lubrifiée, est posée sur la face supérieure de l'éjecteur 49, qui, à ce stade, affleure sensiblement la face supérieure des matrices.

On provoque ensuite la descente du piston de presse ( non représenté) dont sont solidaires le mandrin 17 et le poussoir 38. Le mandrin 17, qui dépasse vers le bas par rapport au poussoir 38, repousse le fond 8 de l'ébauche et l'éjecteur 49 jusqu'à la position représentée à la moitié gauche de la figure 10, en comprimant de manière correspondante le ressort 50. A partir de ce moment, le poussoir 38 s'appuie sur les surfaces d'entraînement supérieures 57 des matrices 12 qui descendent le long des glissières inclinées 37 en se rapprochant radialement de l'axe Z et circonférentiellement les unes des autres. Le mandrin 17, et par conséquent l'ébauche, subissent un déplacement axial conjoint avec les matrices 12.

Le formage se poursuit jusqu'à la fin de la course de travail représentée à la partie droite des figures 9 et 10. Ensuite, le piston de presse remonte entraînant vers le haut le mandrin 17 et le poussoir 38. Le barillet formé, les matrices sont repoussées vers le haut par le plongeur 47, puis le barillet est dégagé des matrices 12 par l'éjecteur 49 et du mandrin 17 par le dévêtisseur 54.

L'outillage représenté à la figure 14, qui ne sera décrit qu'en ce qui concerne ses différnces par rapport à celui de la figure 10 est aménagé pour utiliser un mandrin contractable radialement selon la figure 4, en phase initiale de formage à gauche de la figure 14 et finale à droite de la figure.

Les éléments de formage 31 sont maintenus axialement sur le poussoir 38 par la bague 57, formant collerette intérieure, et fixée elle-même au poussoir 38 par un anneau élastique 58. Les éléments de formage 31 reçoivent cette bague dans une entaille en forme de secteur de cercle 59 et conservent ainsi leur liberté de déplacement en direction radiale par rapport au poussoir 38. Des colliers élastiques 60 et 61 faits d'un ressort hélicoïdal à axe annulaire, et logés dans des entailles 71 et 72 de chacun des trois éléments de formage 31 appliquent ces derniers contre les faces obliques 32 du noyau pyramidal 33. L'entaille 72 est pratiquée dans la face inférieure des éléments de formage 31, qui est adjacente en service à la face intérieure du fond 8 de l'ébauche. L'entaille 71 est formée axialement au-delà d'une extrémité des surfaces de formage des éléments 31 qui est opposée au fond 8 en service.

Le noyau pyramidal 33 porte à sa base, tournée vers le haut, un arbre axial 62 présentant à distance au-dessus des éléments 31 un épanouissement 63 qui reçoit un axe transversal 64 traversant des fentes axiales 81 de la douille 54, ainsi que des lumières 65 allongées axialement usinées dans la paroi du poussoir tubulaire 38. L'épanouissement 63 reçoit également, au-dessus de l'axe transversal 64, l'extrémité 66 de la tige, d'axe Z, d'un vérin hydraulique ou pneumatique non représenté ainsi que, sous l'axe 64, la base d'un ressort de compression 68 antagoniste à ce vérin, et dont l'autre extrémité est appuyée sur le sommet des éléments de formage 31. Le ressort 68 entoure l'arbre 62 et est entouré par le poussoir 38.

La couronne 51 qui limite la course de retour vers le haut des matrices 12 sert de plus ici de butée à l'axe transversal 64, donc au noyau pyramidal 33, à partir de la phase intermédiaire de formage représentée en trait plein en bas de la figure 4.

Le fonctionnement est le suivant. Au départ, comme dans l'exemple précédent, la surface supérieure de l'éjecteur 49 est au niveau de la surface supérieure des matrices 12, et le poussoir 38 et le mandrin 17 sont suffisamment relevés pour permettre la mise en place de l'ébauche 11.

Ensuite, on fait descendre le poussoir 38 qui entraîne les éléments de formage 31 par l'intermédiaire de la bague 57, et on active le vérin d'actionnement de la tige 66, ce qui place l'axe 64 à l'extrémité inférieure des lumières 65, comprime le ressort 68, et place les éléments de formage 31 dans la position radialement écartée, le tout comme représenté dans la partie gauche de la figure 14 au moment où le poussoir 38 vient de prendre appui au sommet des matrices 12. A partir de cette position, le poussoir 38 pousse les matrices 12 vers le bas, l'éjecteur 49 continue sa course vers le bas et le plongeur 47 commence sa course vers le bas.

Dans une première partie de la course de travail, jusqu'à la position représentée en trait plein en bas de la figure 4, l'axe 64 reste appliqué contre les 13 extrémités inférieures des lumières 65 par le vérin d'actionnement de la tige 66. Pendant ce temps, les matrices 12 commencent à se rapprocher radialement de l'axe Z.

A un certain stade de la course de travail, l'axe 64 rencontre la couronne de butée 51, ce qui interrompt la course vers le bas du noyau pyramidal 33. Le poussoir tubulaire 38 poursuit sa course de travail, entraînant les éléments de formage 31 par l'intermédiaire de la bague 57. Les éléments de formage 51 ont donc par rapport au noyau pyramidal 33 un mouvement de glissement qui se traduit, par rapport à l'ébauche et aux matrices, en un mouvement dirigé vers l'axe Z sans composante axiale. Ce mouvement vers l'axe Z est fortement assisté par la poussée radiale des matrices 12, transmise par la paroi latérale de l'ébauche, et ceci jusqu'à obtention du profil de la partie supérieure de la figure 4.

La phase finale de formage est également représentée à la partie droite de la figure 14. La course axiale du poussoir 38 après que l'axe 64 a rencontré la couronne de butée 51 est telle qu'en phase finale de formage (partie droite de la figure 14), il subsiste un léger jeu entre l'axe 64 et l'extrémité supérieure 70 des lumières 65.

L'éjection de la pièce et son dévêtissage s'effectuent comme pour le montage représenté à la figure 10, sauf que la commande de remontée du piston de presse supprime la pression au vérin auxiliaire actionnant la tige 66 et permet ainsi au ressort antagoniste 68 de soulever le noyau pyramidal 33 jusqu'à la butée de l'axe transversal 64 contre l'extrémité supérieure 70 des lumières 65, ce qui relaxe la pression radiale du mandrin contractable à l'intérieur du barillet formé et facilite le dévêtissage. En effet, le retrait préalable des matrices 12, et en particulier de leurs saillies 13, a permis une légère relaxation élastique des arêtes 4 radialement vers l'extérieur (de quelques dixièmes de millimètres), et par conséquent une relaxation du pincement exercé par les éléments 31 sur les arêtes 4 malgré le léger rapprochement circonférentiel des éléments 31 les uns par rapport aux autres lorsque l'axe 64 passe de la position représentée à la droite de la figure 4 à la position en butée contre l'extrémité 70 des lumières 65.

Dans l'exemple de la figure 10 comme dans celui de la figure 14, la force de travail nécessaire au formage des barillets est maximale en fin de course. En conséquence, les presses mécaniques à genouillères ou à vilebrequins sont particulièrement avantageuses, ainsi que les presses hydrauliques à deux vitesses de travail.

On a décrit en détail le formage des barillets à six pistes, qui sont les plus courants, mais il est évident que le procédé de formage ainsi que l'outillage de presse simple et performant pourraient sans difficulté s'appliquer au formage de barillet comportant un nombre de pistes différent.

## Revendications

1. Procédé pour former un barillet pour joint de transmission articulé coulissant, ce barillet (3) comportant une paroi annulaire (211) dont une face intérieure définit des pistes (1) à profil sensiblement circulaire qui s'étendent parallèlement à un axe (Z) du barillet, caractérisé en ce qu'on place une paroi latérale sensiblement cylindrique (9) d'une ébauche (11) entre, radialement à l'intérieur de la paroi latérale, un mandrin de formage (17), comportant des surfaces de formage (18) sensiblement complémentaires des pistes (1) à former, et, radialement à l'extérieur de la paroi latérale, des matrices (12) se succédant circonférentiellement avec un jeu circonférentiel entre elles et présentant des surfaces de pression (14, 15, 16) vers la paroi latérale (9) de l'ébauche, et en ce qu'on communique aux matrices (12) un déplacement simultané vers l'axe (Z) du mandrin pour que leurs surfaces de pression compriment radialement la paroi latérale (9) de l'ébauche contre les surfaces de formage (18) du mandrin (17).

2. Procédé selon la revendication 1, caractérisé en ce que la paroi latérale (9) de l'ébauche a avant qu'on déplace les matrices (12) une longueur circonférentielle sensiblement égale à la longueur circonférentielle développée désirée pour la paroi annulaire du barillet en fin de formage.

3. Procédé selon l'une des revendications 1 ou 2, caractérisé en ce que les surfaces de pression des matrices comprennent des régions (15) décalées par rapport aux surfaces de formage (18) du mandrin pour comprimer davantage la paroi latérale (9) de l'ébauche dans des régions où la déformation à appliquer à la paroi latérale est plus conséquente et/ou où la précision requise pour le formage de la face intérieure de la paroi latérale est plus grande.

4. Procédé selon l'une des revendications 1 à 3, caractérisé en ce que les surfaces de pression des matrices (12) comprennent des régions convexes (13) avec lesquelles on forme sur la face extérieure de la paroi latérale (9) de l'ébauche des vallées longitudinales (5) correspondant à des régions convexes (4) de la face intérieure de la paroi latérale.

5. Procédé conforme à la revendication 4, caractérisé en ce qu'on raccorde la paroi annulaire obtenue à un flasque (75) présentant en regard des vallées (5) des trous (76) de fixation du barillet.

6. Procédé selon l'une des revendications 1 à 5, caractérisé en ce qu'on utilise une ébauche (11) dont la paroi latérale (9) est raccordée, à l'une au moins de ses extrémités, à une paroi sensiblement radiale (8, 10), en ce qu'à cette extrémité on laisse à la paroi annulaire (211) du barillet le profil circulaire initial de la paroi latérale (9) de l'ébauche et, au voisinage de cette extrémité, on forme l'ébauche selon des profils de transition (7, 108) correspondant à des déplacements de matière dont l'amplitude croît à partir de cette extrémité.

7. Procédé selon l'une des revendications 1 à 6, caractérisé en ce que lorsqu'on déplace les matrices (12) vers l'axe (Z) du mandrin (17) on donne aux matrices (12) un mouvement ayant une composante axiale et en ce qu'on déplace l'ébauche (11) et le mandrin (17) de façon qu'ils accompagnent axialement les matrices (12).

8. Procédé selon l'une des revendications 1 à 7, caractérisé en ce qu'on utilise un mandrin (17) comportant sur sa périphérie des éléments de formage (31) qui se suivent circonférentiellement et qui portent les surfaces de formage (18), et en ce que pendant que l'on rapproche les matrices (12) de l'axe (Z) du mandrin, on déplace aussi les éléments de formage (31) vers l'axe (Z) du mandrin.

9. Procédé selon l'une des revendications 1 à 7, caractérisé en ce que pendant qu'on rapproche les matrices (12) de l'axe (Z) du mandrin, on permet à des éléments de formage individuels (21) faisant partie du mandrin (17) et portant chacun une surface de formage (18) de l'une des pistes, de tourner autour d'un axe (Y) , correspondant à celui de la piste à réaliser, par rapport à un noyau (22) du mandrin (17).

10. Procédé selon l'une des revendications 1 à 7, pour réaliser un barillet dont les pistes (1) comprennent des pistes concaves s'étendant chacune sur un flanc d'une arête (4) la séparant d'une piste voisine s'étendant sur l'autre flanc de cette arête (4), caractérisé en ce qu'au moyen de saillies (13) présentées par les surfaces de pression des matrices (12) on fait s'écouler la matière de l'ébauche (3) radialement vers l'intérieur dans des dégagements (19) définis chacun entre deux protubérances (21, 21a) du mandrin (17) qui portent les surfaces de formage (18) de deux pistes voisines.

11. Procédé conforme à la revendication 10, caractérisé en ce qu'on fait exercer par les matrices (12) une compression circonférentielle sur la paroi latérale (9) de l'ébauche, de façon à former un pli qui s'engage de manière spontanée ou quasi-spontanée dans le dégagement, pour augmenter la quantité de matière présente dans le dégagement pour le processus de formation de l'arête par écoulement de la matière.

12. Procédé conforme à la revendication 10 ou 11, caractérisé en ce que chaque saillie (13) est à milongueur circonférentielle de l'une des matrices (12).

13. Procédé conforme à l'une des revendications à 12, caractérisé en ce qu on réalise le déplacement des matrices (12) vers l'axe (Z) du mandrin de façon que les saillies aient une vitesse à composante tangentielle sensiblement nulle.

14. Procédé conforme à l'une des revendications 10 à 13, caractérisé en ce qu'on interrompt le déplacement des matrices (12) vers l'axe (Z) du mandrin avant que la crête de l'arête (4) formée sur la face intérieure de la paroi latérale de l'ébauche ne touche un fond du dégagement correspondant (19) du mandrin.

15. Procédé conforme à l'une des revendications 10 à 14, caractérisé en ce que chaque matrice (12) présente de part et d'autre de chaque saillie (13) une région (15) ayant un profil correspondant sensiblement, à l'épaisseur de paroi de l'ébauche près, à celui des pistes à réaliser.

16. Procédé conforme à l'une des revendications 10 à 14, caractérisé en ce que chaque matrice (12) présente, de part et d'autre de chaque saillie (13) une région (15) ayant un profil correspondant à celui des pistes (1) à réaliser sur la face intérieure de la paroi latérale de l'ébauche, mais décentré relativement au profil des pistes (1) à réaliser, pour réduire l'épaisseur de matière du barillet au voisinage de chaque arête (4) à réaliser.

17. Procédé conforme à l'une des revendications 15 ou 16, caractérisé en ce que chaque matrice (12) présente au-delà de la région à profil correspondant une région de bord arrondie (27).

18. Procédé conforme à l'une des revendications 10 à 17, caractérisé en ce qu'on utilise un mandrin composé ayant un noyau (22) supportant, avec possibilité de rotation sensiblement autour des axes (Y) des pistes (1) à réaliser, des éléments de formage cylindriques (21) définissant les surfaces de formage (18).

19. Procédé conforme à l'une des revendications 10 à 18, caractérisé en ce qu'on accompagne le déplacement des matrices (12) vers l'axe (Z) du mandrin d'un pivotement de la surface de formage (18) de chaque protubérance (21) vers l'arête adjacente (4) à réaliser, autour de l'axe (Y) des pistes respectives (1) à réaliser.

20. Procédé conforme à la revendication 19, caractérisé en ce qu'on réalise le pivotement de la surface de formage (18) des protubérances (21) par friction entre la paroi latérale de l'ébauche (11) et la surface de formage (18) des protubérances.

21. Procédé conforme à l'une des revendications 10 à 20, caractérisé en ce qu'on utilise comme mandrin un mandrin comprenant entre les surfaces de formage (18) des surfaces de raccordement (20) de forme sensiblement cylindrique convexe d'axe voisin de l'axe du mandrin et s'étendant entre les surfaces de formage (18) en alternance avec les dégagements (19).

22. Procédé conforme à la revendication 21, caractérisé en ce que les surfaces de raccordement ont un rayon (R1) supérieur au rayon (R2) qu'a en regard de ces surfaces de raccordement la face intérieure de la paroi annulaire du barillet à la fin du déplacement des matrices (12).

23. Procédé conforme à la revendication 21, caractérisé en ce que lorsqu'on arrête le déplacement des matrices (12) vers l'axe (Z) du mandrin, il subsiste un jeu (28, 36) entre les surfaces de raccordement (20) et la région située en regard appartenant à la face intérieure de là paroi annulaire (211) du barillet (3).

24. Procédé conforme à la revendication 23, caractérisé en ce qu'on utilise pour chaque élément de formage (31) un élément dont la surface de formage comprend une surface de raccordement (20) de forme sensiblement cylindrique convexe s'étendant entre deux surfaces de formage (18) de cet élément, et dont le rayon (R1) est inférieur au rayon (R3) de la face intérieure de la paroi latérale de l'ébauche (102) et supérieur au rayon (R2) qu'a en regard de ces surfaces de raccordement la face intérieure de la paroi annulaire du barillet à la fin du déplacement des matrices (12).

25. Procédé selon l'une des revendications 8, 23 ou 24, caractérisé en ce qu'on commence à rapprocher les éléments de formage (31) de l'axe (Z) du mandrin (17) après que les matrices (12) ont effectué une première partie de leur course vers l'axe (Z) du mandrin.

26. Procédé selon l'une des revendications 8, 23 à 25, caractérisé en ce que pour déplacer les éléments de formage (31) vers l'axe (Z) du mandrin (17) on établit un mouvement axial relatif entre un noyau central (33) du mandrin, en forme générale de pyramide, et les éléments de formage (31) dont des faces arrière inclinées (34) sont appuyées sur des faces (32) du noyau central (33), qui ont une inclinaison correspondante.

27. Procédé selon l'une des revendication 1 à 26, caractérisé en ce qu'on utilise comme ébauche une ébauche (11) en tôle emboutie en forme de bol comportant un fond (8) sensiblement plat fermant au moins partiellement l'une des extrémités de la paroi latérale (9).

28. Procédé selon la revendication 27, caractérisé en ce qu'on utilise comme ébauche une ébauche (11) comportant à une extrémité opposée au fond (8) un rebord (10) dirigé vers l'extérieur de manière sensiblement radiale.

29. Outillage de presse pour former un barillet pour joint de transmission articulé coulissant, caractérisé en ce qu'il comprend :
- un mandrin (17) destiné à être relié à un piston de presse pour se déplacer parallèlement à un axe central de ce mandrin, et présentant sur sa périphérie des surfaces de formage cylindriques (18) d'axes (Y) parallèles à l'axe central (Z) ;
- des matrices (12) se succédant circonférentiellement avec, au moins dans une position de repos, un jeu circonférentiel (J) entre elles, ces matrices étant montées sur des glissières (37) ayant des orientations convergeant vers l'axe (Z) du mandrin ;
- un poussoir (38) destiné à être relié au piston de presse pour solliciter simultanément les matrices (12) en coulissement le long des glissières (37) dans des directions convergeant vers l'axe (Z) du mandrin.

30. Outillage conforme à la revendication 29, caractérisé par une douille de dévêtissage (54) interposée radialement entre le mandrin (17) et le poussoir (38) qui a une configuration tubulaire.

31. Outillage conforme à la revendication 30, caractérisé par des moyens de rappel (48, 50) des matrices (12) et/ou du barillet (3) en fin de formage coiffant une extrémité libre du mandrin (17) et/ou du mandrin (17), dans le sens correspondant à un écartement des matrices (12) relativement à l'axe (Z) du mandrin.

32. Outillage conforme à l'une des revendications 29 à 31, caractérisé en ce que le mandrin comprend un noyau pyramidal (33) contre les faces duquel des éléments de formage (31) sont montés de manière coulissante, et en ce que l'outillage comprend des moyens de butée (64, 69) limitant la course axiale du noyau (33), ainsi que des moyens d'entraînement (57) portés par le poussoir (38) pour entraîner les éléments de formage (31), par rapport au noyau (33) dans un sens rapprochant les éléments de formage (31) de l'axe (Z) du mandrin lorsque le noyau (33) est en butée.

33. Outillage conforme à l'une des revendications 29 à 31, caractérisé en ce que le mandrin comprend un noyau (22) et des éléments de formage cylindriques (21) supportés avec possibilité de rotation autour de leur axe (Y) dans des logements cylindriques complémentaires du noyau.

34. Joint de transmission articulé télescopique, notamment pour véhicule, comprenant un organe intérieur muni de bras (102) disposés sensiblement radialement relativement à son axe (T) et partiellement entourés chacun par deux éléments intercalaires (206) dont les faces radialement extérieures (203), de profil transversal courbe, s'appuient sur des pistes longitudinales (1) de profil sensiblement complémentaire, appartenant à la face intérieure d'une paroi annulaire (211) d'un barillet (3) par rapport auquel chaque bras (2) de l'organe intérieur est mobile selon une course télescopique prédéterminée, caractérisé en ce que la paroi annulaire (211) est réalisée en tôle et présente un profil extérieur qui suit approximativement le profil intérieur de cette paroi.

35. Joint selon la revendication 34, dans lequel les pistes (1) sont concaves et réparties en paires séparées par des arêtes (4), caractérisé en ce que l'épaisseur radiale de matière de la paroi annulaire (3) est accrue au droit des arêtes (4).

FIG.1          FIG.2

EP 0 429 327 A1

FIG. 3

EP 0 429 327 A1

FIG.4

FIG.7

FIG.8

FIG.5

FIG.6

FIG_12

FIG_13

FIG_9

FIG.10

FIG.11

EP 0 429 327 A1

FIG_14

FIG.15

FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CI.5) |
|---|---|---|---|
| X,Y | EP-A-0 074 614  (TOYOTA JIDOSHA KABUSHIKI KAISHA)<br>* page 5, ligne 27 - page 15, ligne 15; figures 1-7 * | 1-6,<br>10-13,15,<br>21,34,8,<br>25-28,35 | B<br>21 D 17/02<br>B 21 D 53/88<br>F 16 D 3/20<br>F 16 D 3/24 |
| Y | EP-A-0 041 302  (THOMASSEN & DRIJVER-VERBLIFA B V)<br>* page 5, ligne 12 - page 6, ligne 23; figures 1-4 * | 8,25,26,<br>32 | |
| X,Y | EP-A-0 062 067  (TOYOTA JIDOSHA KABUSHIKI KAISHA)<br>* page 2, ligne 25 - page 4, ligne 5; figures 1-3, 13-15 * | 34,27,28 | |
| D,Y | FR-A-2 607 883  (ORAIN)<br>* figure 2 * | 35 | |
| X,Y,A | EP-A-0 058 465  (GENERAL MOTORS CORPORATION)<br>* page 8, ligne 28 - page 11, ligne 25; figures 12, 13 * | 29,30,34,<br>32,31 | |
| X | FR-A-2 169 450  (GLAENZER SPICER)<br>* page 3, lignes 30 - 36; figures 1-7 * | 1,34 | |
| A | FR-A-2 133 292  (GLAENZER SPICER)<br>* page 1, ligne 27 - page 2, ligne 5; figure 11 * | 18-20 | |

DOMAINES TECHNIQUES RECHERCHES (Int. CI.5)

B 21 D
F 16 D

Le présent rapport de recherche a été établi pour toutes les revendications

| Lieu de la recherche | Date d'achèvement de la recherche | Examinateur |
|---|---|---|
| La Haye | 15 janvier 91 | GARELLA M.G.C.D. |